# EUROPÄISCHE PATENTSCHRIFT

(11) **EP 1 455 024 B1**
(45) Veröffentlichungstag und Bekanntmachung des Hinweises auf die Patenterteilung: **17.09.2008**
(21) Anmeldenummer: 04003992.7
(22) Anmeldetag: 23.02.2004
(51) Int. Cl.: F16K 27/00, E03B 9/08, E03B 9/12

(54) **Hydrant, insbesondere Unterflurhydrant, mit Gehäuse aus Polyethylen**
Hydrant, in particular underground hydrant, with casing made of polyethylene
Bouche d'incendie, en particulier bouch d'incendie souterraine, avec boîtier en polyéthylène

(30) Priorität: 03.03.2003 DE 10309470
(43) Veröffentlichungstag der Anmeldung: 08.09.2004
(73) Patentinhaber: VAG-Armaturen GmbH, 68305 Mannheim (DE)
(72) Erfinder: Schmidt, Manfred, 69493 Hirschberg (DE); Böttge, Lothar, 63571 Gelnhausen (DE)
(74) Vertreter: Rapp, Bertram

(56) Entgegenhaltungen:
- DE-A- 2 621 163
- DE-A- 3 435 778
- DE-A- 4 119 104
- DE-A- 10 052 505
- DE-A- 19 834 904
- GB-A- 976 487

## Beschreibung

Die Erfindung betrifft einen Hydranten, insbesondere Unterflurhydranten, nach dem Oberbegriff des Anspruchs 1.

Solch ein Unterflurhydrant ist, beispielsweise, aus der DE 41 19 104 A1 bekannt. Dort ist das Mantelrohr mit dem Ventilgehäuse als einstückiges Gussteil ausgebildet, was unter anderem zu einem schweren, in seinem Einsatzgebiet beschränkt und korrosionsanfälligen Unterflurhydranten führt.

Grundsätzlich sind auch mehrteilige, höhenverstellbare Hydranten bekannt, siehe beispielsweise die DE 100 28 655 A1.

Des Weiteren ist eine Vielzahl von Dränagevorrichtungen bzw. Entwässerungsvorrichtungen für Hydranten bekannt. So offenbart die US 5,368,064 beispielsweise einen Hydranten, in dem mehrere Auslassöffnungen vorgesehen sind, die jeweils über Ohren eines Ventilkörpers verschlossen werden können. Aus der DE 197 22 578 A1 ist eine weitere Dränagevorrichtung für einen Hydranten bekannt, die zwei Schalenteile, die zu einer Schürzenform zusammenbaubar sind und aus Polyethylen hergestellt sein können, um Dränagematten bzw. Sickerpackungen, beispielsweise aus Polypropylen, umfasst.

Auch aus der DE 100 52 505 A1 ist ein gattungsgemäßer Unterflurhydrant bekannt, beim dem der Hauptventilkörper axial in einem Ventilsitzring dichtend geführt ist, während der Rückschlagventilkörper in Form einer Kugel dicht an einer Formdichtung anliegt. Der Ventilsitzring ist dabei an seinen beiden Rändern aufgeweitet, um an seinem oberen, dem Rückschlagventilkörper abgewandten Rand über einen Dichtring für eine Dichtung zum Mantelrohr und an seinem unteren, dem Rückschlagventilkörper zugewandten Rand über die Formdichtung für eine Dichtung zum Ventilgehäuse zu sorgen. Dies stellt einen komplizierten und montageaufwendigen Aufbau dar.

Die GB 976 487 A hat einen Hydranten zur Installation unter der Erde zum Gegenstand, der im Wesentlichen aus Metall gefertigt ist. Kunststoff wird bei dieser Druckschrift sowohl für ein Rohrstück eingesetzt, als auch für Teile des Ventils und für das Gehäuse.

Die DE 26 21 163 A1 beschreibt einen Unterflurhydranten mit einer Betätigungsspindel und einer Spindelmutter, wobei ein Absperrkolben, der in Offenstellung in einer Ausbauchung des Metallrohres oberhalb des Sitzzylinders sitzt, an seinem oberen Ende eine schräg nach oben und außen gerichtete, durch den Gummimantel gebildete elastische Abstreiflippe mit einer im entspannten Zustand über den Innendurchmesser des Sitzzylinders hinausragenden und im eingefahrenen Zustand des Absperrkolbens fest an der Innenwand des Sitzzylinders anliegenden Abstreifkante aufweist und an seinem unteren Ende mit einem durch den Gummimantel gebildeten Prallrand versehen ist, dessen oberer Abschnitt durch einen nach außen vorspringenden, dem Innendurchmesser des Sitzzylinders entsprechenden Abstreifrand gebildet wird, der nach unten hin in eine nach innen zurückspringende Leitfläche übergeht, die unten in einen Umlenkrand einmündet, dessen stirnseitiger Abschnitt eine zum Kolbeninneren hin gerichtete Wölbung aufweist, wobei die ebenfalls durch den Gummimantel gebildete Dichtwulst in der Kolbenmitte zwischen der oberen Ringnut der Abstreiflippe und der unteren Ringnut des Prellrandes liegt. Hierdurch wird erzielt, dass weder Fremdteile von Innen noch von Außen die Funktion des Kolbenventils stören können.

Die DE 34 35 778 A1 beschreibt einen Unterflurhydranten mit einem einen Standrohranschluss aufweisendes und eine höhenverstellbare Ventilstange enthaltendes Mantelrohr. An dessen unterem Ende ist ein Absperrventil vorhanden, das einen wasserrohrleitungsseitigen Ventilsitz mit Axialdichtungssitzfläche und einen Schließkraft beaufschlagten Ventilkörper aufweist, der an der Ventilstange begrenzt vertikal verschieblich geführt und von dieser im Bereich einer Axialdichtungsfläche gegen die Dichtungsfläche des Ventilsitzes pressbar ist. Damit der Hydrant auch im Falle eines Druckausgleichs des Innenraums des Mantelrohrs mit der Rohrwasserleitung zuverlässig schließt, ist zusätzlich zu der Axialdichtungssitzfläche eine weitere, sich wasserrohrleitungsseitig verjüngende Radialdichtungsfläche vorhanden, und der Ventilkörper weist einen mit dieser Radialdichtungssitzfläche bereits vor dem Schließen der Axialdichtungen Eingriff kommenden Radialdichtungswulst auf.

Schließlich beschreibt die DE 198 34 904 A1 einen Nutzwasseranschluss mit einer unterirdischen Zuströmleitung, einer oberirdischen Anschlusskupplung, die über ein Steigrohr miteinander in Strömungsverbindung stehen, wobei die Zuströmleitung innerhalb eines frostfreien Erdreichniveaus verlegt ist und mündet und wobei das Steigrohr über ein Absperrventil mit der Zuströmleitung strömungsverbunden ist und dieses Absperrventil ebenfalls innerhalb dieses frostfreien Erdreichniveaus verlegt ist. Diese Druckschrift befasst sich nicht mit dem Thema der Frostsicherheit, da die in Rede stehenden Teile im frostfreien Bereich verlegt sind.

Es besteht daher die Aufgabe, einen gattungsgemäßen Hydranten, insbesondere Unterflurhydranten, so auszubilden, dass er die Nachteile des Standes der Technik überwindet und insbesondere vielfältig einsetzbar ist sowie eine hohe Haltbarkeit aufweist.

Gelöst wird diese Aufgabe mit den kennzeichnenden Merkmalen des Anspruchs 1. Vorteilhafte Ausgestaltungen sind den Unteransprüchen entnehmbar.

Weitere Merkmale und Vorteile der Erfindung ergeben sich aus der nachfolgenden Beschreibung, in der erfindungsgemäße Ausführungsbeispiele anhand von schematischen Zeichnungen im Einzelnen erläutert sind. Dabei zeigen:
- Figur 1: eine Explosionsansicht eines Rohrnetzes mit einem erfindungsgemäßen Unterflurhydranten;
- Figur 2a: eine perspektivische Draufsicht auf einen erfindungsgemäßen Unterflurhydranten;
- Figur 2b: eine Querschninsansicht durch den Unterflurhydranten von Figur 2a;
- Figur 3a: eine Seitenansicht einer Ausführungsform eines erfindungsgemäßen Unterflurhydranten;
- Figur 3b: eine Längsschnittansicht der Ausführungsform von Figur 3a, in der Schnittebene B-B von Figur 3a, mit geschlossenem Hauptventil;
- Figur 4: eine Teilschnittansicht, ähnlich Figur 3b, eines weiteren erfindungsgemäßen Unterflurhydranten mit geöffnetem Hauptventil; und
- Figur 5: eine perspektivische Ansicht einer Buchse für einen erfindungsgemäßen Unterflurhydranten.

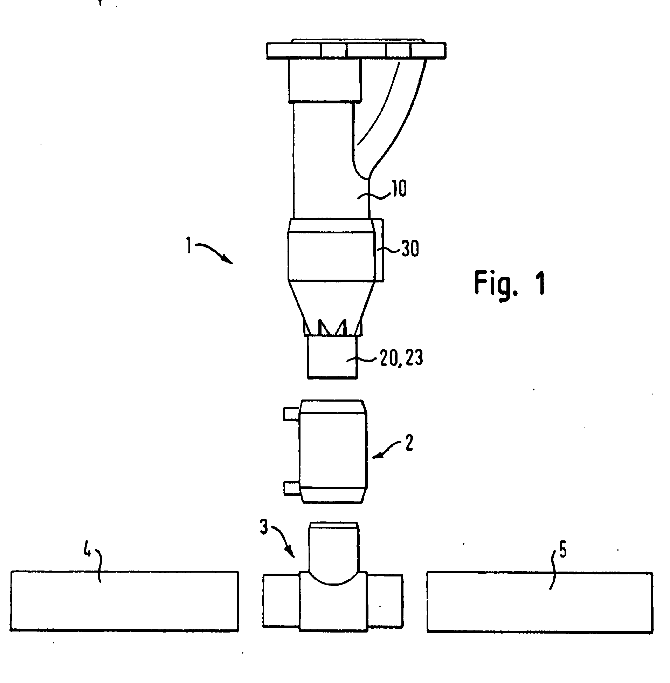

Wie Figur 1 zu entnehmen ist, ist ein erfindungsgemäßer Unterflurhydrant 1 über eine standardgemäße Schweißmuffe 2, wie eine Heizwendelschweißmuffe, mit einem T-Stück 3 zum Anschluß an zwei Rohre 4, 5 verbindbar. Seinerseits umfaßt der Unterflurhydrant 1 ein Mantelrohr 10 in Verbindung mit einem Ventilgehäuse 20 in Form eines Spitzendes 23 und einer Entwässerungsvorrichtung 30. Dabei stellt das Mantelrohr 10 ein Oberteil und das Spitzende 23 ein Unterteil dar, wobei diese beiden Teile entweder direkt, wie in Figur 1 gezeigt, oder indirekt, unter Zwischenschaltung eines nicht dargestellten Mittelteils in Form eines Rohrs, miteinander verbunden werden können. Dies ermöglicht, nach Art eines Baukastenprinzips, erfindungsgemäße Unterflurhydranten 1 in ihrer Länge an die speziellen Gegebenheiten eines Einsatzortes, wie die Tiefe eines Baugrabens oder dergleichen, anzupassen. Die Anpassung kann dabei aufgrund des modularen Aufbaus des Unterflurhydranten 1 mit Oberteil, Mittelteil und Unterteil vor Ort stattfinden, indem entweder kein Mittelteil oder ein Mittelteil einer gewünschten Länge zwischen das Oberteil und das Unterteil eingebracht wird. Der modulare Aufbau ermöglicht somit auch den Einsatz nicht gängiger Baulängen von Unterflurhydranten. Zusätzlich zu dieser hohen Flexibilität in der Bemaßung des erfindungsgemäßen Unterflurhydranten 1 bringt der modulare Aufbau desselben auch eine Reduktion an zu lagernden und zur jeweiligen Baustelle zu transportierenden Bauteilen mit sich. Dies reduziert in großem Maße die Kosten, zusätzlich zur erhöhten Flexibilität vor Ort.

Für die Verbindung zwischen dem Mantelrohr 10 und dem Spitzende 23, gegebenenfalls unter Zwischenschaltung eines Rohrs, können verschiedene Techniken, wie Fügetechniken, zum Einsatz kommen, was ebenfalls der Flexibilität dient. Ein erfindungsgemäßer Unterflurhydrant 1 kann auch auf verschiedene Weisen mit einem Rohrnetz 4, 5 verbunden werden, ist also nicht auf den Einsatz eines Spitzendes beschränkt. Es kann z.B. auch eine herkömmliche Flanschverbindung zum Einsatz kommen.

Besonders bevorzugt ist es, sowohl das Mantelrohr 10 als auch das Spitzende 23 des Unterflurhydranten 1 aus Polyethylen, insbesondere HDPE (High Density Polyethylen), vorzugsweise PE 100, auszubilden. Dies führt zu Rohrnetzen mit Rohren 4, 5 und Verbindungsstükken, wie das T-Stück 3, die in bewährter Weise aus Polyethylen hergestellt sind, die eine Materialhomogenität aufweisen. Diese Homogenität in der Materialauswahl erleichtert weiter die Lagerhaltung, da beispielsweise auch möglicherweise zwischen Mantelrohren 10 und Spitzenden 23 einzusetzende Rohre ebenfalls aus Polyethylen ausgebildet sein können, also grundsätzlich den Rohren 4 und 5 entsprechen können. Aufgrund der Materialhomogenität existiert auch eine große Freiheit in der Wahl der Anschlußmöglichkeiten zwischen den verschiedenen Modulen, wobei hier besonders baustellengerechte Schweißverbindungen, bspw. durch Muffenschweißen oder Spiegelschweißen, hervorzuheben sind, die im Falle eines bislang üblichen Grauguß-Unterflurhydranten nicht möglich wären. Auch die Bearbeitung der Module ist durch den Einsatz von Polyethylen vereinfacht. Es ist zudem darauf hinzuweisen, daß der Einsatz von Polyethylen als Herstellungsmaterial für den erfindungsgemäßen Unterflurhydranten 1 auch zu einer Gewichtsreduktion führt. Ferner bringt der Einsatz von Polyethylen eine besondere Korrosionsbeständigkeit mit sich, da Polyethylen keine chemische Reaktion mit Trinkwasser bildet und somit Belagbildungen im wesentlichen vermieden werden. Also kommt es zu einer gesteigerten Hygiene im Rohrnetz insgesamt.

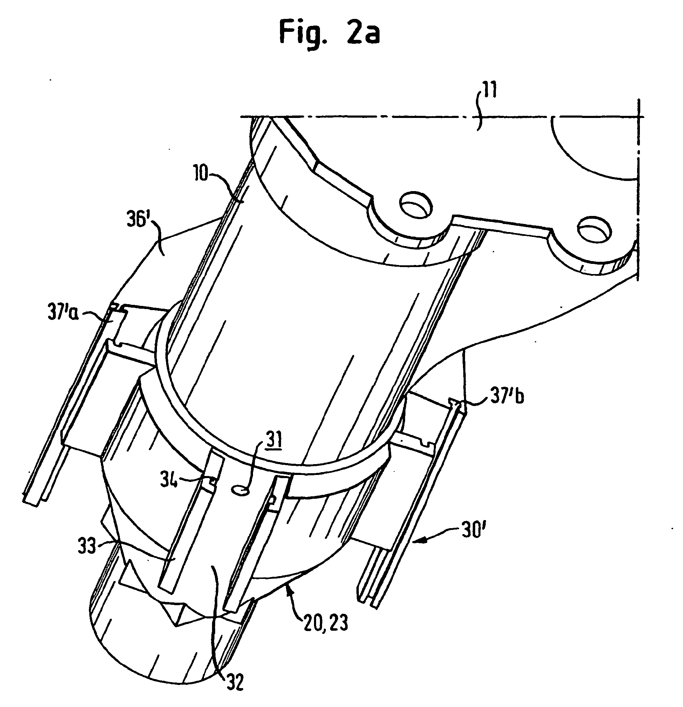

Wie Figur 2a zu entnehmen ist, läßt sich das Mantelrohr 10 über einen Deckel 11, beispielsweise aus nichtrostendem Stahl oder Messing, nach Art einer Flanschverbindung an seinem dem Spitzende 23 gegenüberliegenden Ende verschließen.

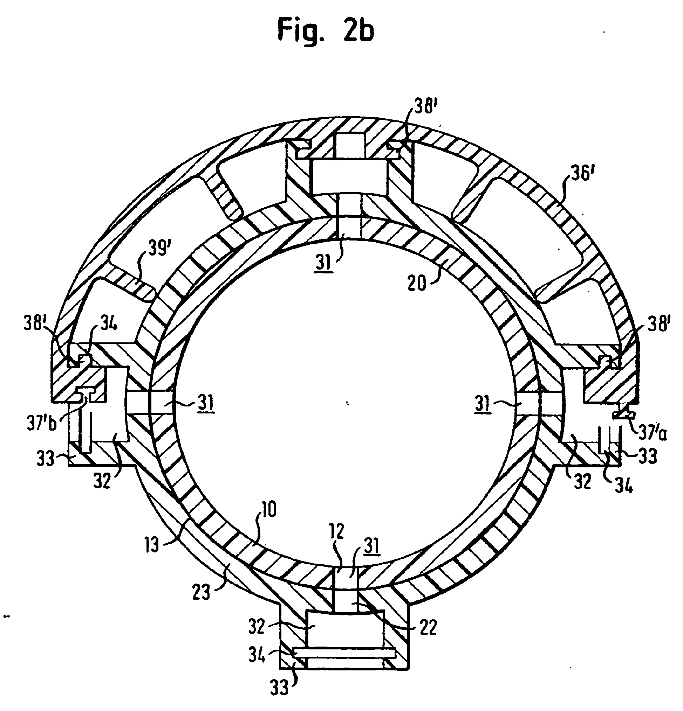

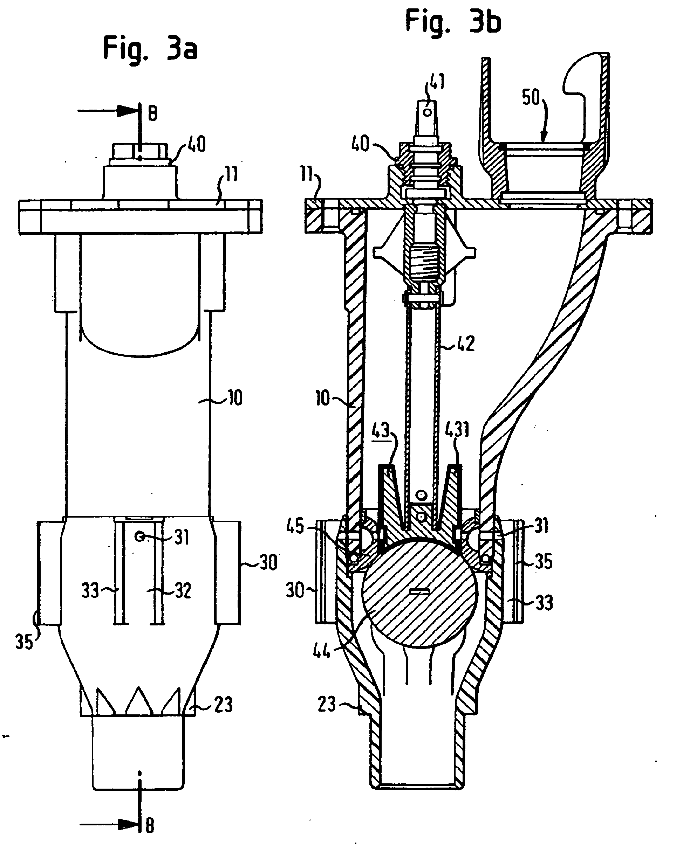

Erfindungsgemäße Unterflurhydranten 1 zeichnen sich auch durch eine besondere Entwässerungsvorrichtung 30, 30' aus. Hierzu ist den Figuren 2a und 2b zu entnehmen, dass in dem Verbindungsbereich von dem Mantelrohr 10 und dem Spitzende 23 nicht nur eine einzige Entwässerungsbohrung, wie bislang üblich, sondern vier Entwässerungsbohrungen 31 in Form von vier Bohrungen 12 in dem Mantelrohr 10 und vier Bohrungen 22 im Spitzende 23 bereitgestellt sind, so daß auch bei Verstopfung einer Entwässerungsbohrung 31 insbesondere durch Wurzelbewuchs, es nicht zu einem Ausbleiben einer Entwässerung kommt. Die Entwässerungsbohrungen 31 führen zu Entwässerungskanälen 32, die von Kanalwänden 33 begrenzt sind. Die Kanalwände 33 dienen auch als Befestigungshilfen durch Bereitstellung von Führungsnuten 34 für das wahlweise Anbringen von Sickerschalen 36', wie in den Figuren 2a und 2b gezeigt, oder Schutzkappen 35, wie beispielsweise in den Figuren 3a und 3b gezeigt. Jeder Entwässerungskanal 32 kann eine Länge bis zu ca. 100 mm aufweisen.

Durch den Einsatz einer Vielzahl von Entwässerungsbohrungen 31 wird die Entleerfunktion, insbesondere die Entleerleistung, des erfindungsgemäßen Unterflurhydranten 1 verbessert und somit seine Zuverlässigkeit erhöht. Zusätzlich wird eine Variabilität bei der Abdeckung der Entwässerungskanäle 32 ermöglicht. So lassen sich einfache Schutzkappen 35 insbesondere zum Schutz vor Steinen, Schmutz und/oder einwachsendem Wurzelwerk oder aber auch Sikkerschalen 36' zum zusätzlichen Bereitstellen von nicht gezeigten Sickerpackungen verwenden. Die Entscheidung, ob Schutzkappen 35 oder Sickerschalen 36' zu verwenden sind, kann noch beim Einbauen des Unterflurhydranten in einer Baugrube stattfinden, was wiederum dem Baukastenprinzip zu Gute kommt. Wird sich beispielsweise anfänglich für den Einsatz von Schutzkappen 35 entschieden, so kann, zu einem beliebigen späteren Zeitpunkt, eine Nachrüstung mit Sickerschalen 36' problemlos vor Ort stattfinden.

Sowohl die Schutzkappen 35 als auch die Sickerschalen 36' sind über die Führungsnuten 34 einfach aufsteckbar. Dabei kommen pro Unterflurhydrant 1 entweder vier Schutzkappen 35 oder zwei Sickerschalen 36' zum Einsatz. Die Sickerschalen 36' umfassen gemäß Figur 2b zusätzlich zu Schienen 38' zum Einführen in die Führungsnuten 34 jeweils einen Vorsprung 37'a und eine Ausnehmung 37'b zur Verbindung zweier Sickerschalen 36' und Rippen 39' zur Versteifung.

In den Figuren 3a und 3b ist ein erfindungsgemäßer Unterflurhydrant 1 mit seinem Mantelrohr 10, verschlossen an einem Ende mit einem Deckel 11 und verbunden an seinem anderen Ende mit einem Spitzende 23, in Entwässerungsstellung, also mit geschlossenem Hauptventil und somit mit geöffneter Entleerung, dargestellt. Die Entwässerungsvorrichtung 30 gemäß den Figuren 3a und 3b zeigt den Einsatz von Schutzkappen 35, eingefügt in Führungsnuten 34 in Kanalwänden 33 zur Begrenzung von Entwässerungskanälen 32 in Verbindung mit Entwässerungsbohrungen 31.

Insbesondere Figur 3b ist ein Aufsatz 40 zu entnehmen, durch den sich eine Ventilspindel 41 erstreckt, die über eine Innengarnitur 42 in dem Mantelrohr 10 in Wirkverbindung mit einem Hauptventilkörper 43 steht, der wiederum in Verbindung mit einem schwimmend gelagerten Rückschlagventilkörper 44 in Form einer Kugel bringbar ist. Zwischen den Ventilkörpern 43 und 44 einerseits und der Gehäusewandung des Unterflurhydranten 1, bereitgestellt durch das Mantelrohr 10 sowie das Spitzende 23, andererseits ist erfindungsgemäß eine Buchse 45 angeordnet. Zudem ist Figur 3b eine Entnahmeöffnung 50 zu entnehmen, durch die bei geöffnetem Hauptventil Wasser aus dem Rohrnetz 4, 5 entnehmbar ist.

Der Hauptventilkörper 43 weist eine nicht gezeigte kugelsegmentförmige Ausnehmung an seinem dem Rückschlagventilkörper 44 zugewandten Ende, vier Flügel 431 an seinem vom Rückschlagventilkörper 44 abgewandten Ende sowie eine Rille 430 zwischen besagten Enden auf. In Figur 3b verläuft die Rille 430 im Bereich der Bohrungen 12 und 22 im Mantelrohr 10 beziehungsweise Spitzende 23, um ein Entwässern zu gestatten.

Der Hauptventilkörper 43 besteht in üblicher Weise aus Metall, insbesondere nichtrostendem Stahl oder Messing, mit einem Überzug aus Gummi, Neopren, Teflon oder dergleichen. Die Buchse 45 ist ebenfalls vorzugsweise aus einem Metall, beispielsweise nichtrostendem Stahl oder Messing, ausgebildet.

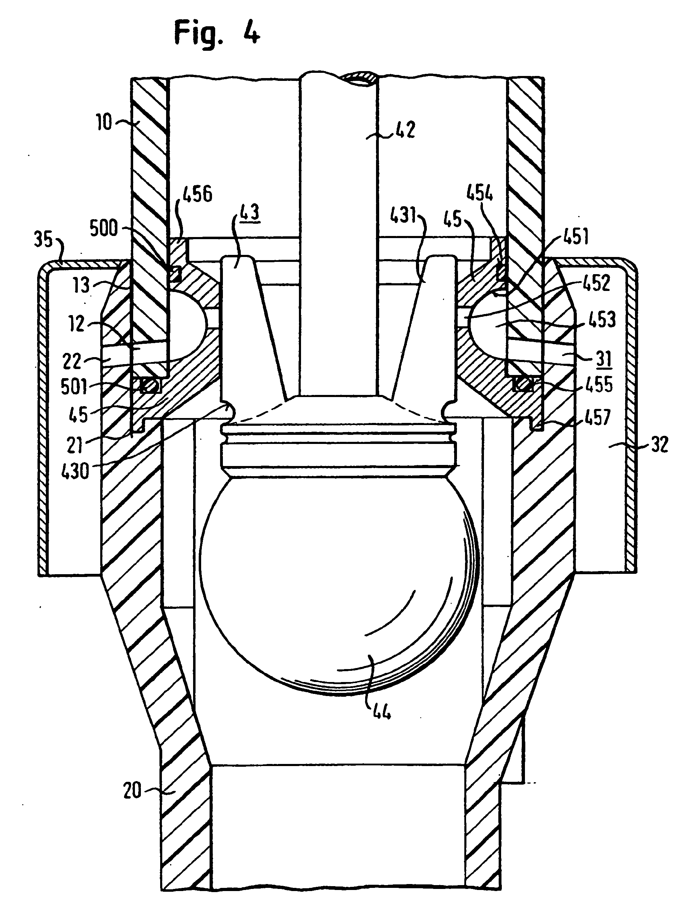

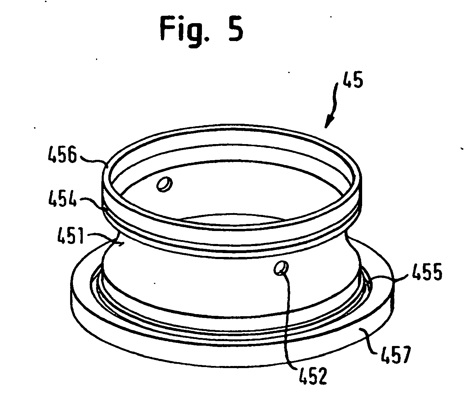

Die Buchse 45 weist ihrerseits, wie insbesondere den Figuren 4 und 5 zu entnehmen ist, Bohrungen 452 im Bereich einer mittigen rillenartigen Ausnehmung 451 auf, die im Entwässerungsfall, wenn also der Hauptventilkörper 43 in seiner Schließposition steht, wie in der Figur 3b dargestellt, mit der Rille 430 des Hauptventilkörpers 43 im wesentlichen fluchten. In dieser Position ist einerseits kein Wasser aus dem Rohrnetz 4, 5 entnehmbar, jedoch kann andererseits Wasser aus dem Bereich innerhalb des Mantelrohrs 10 und oberhalb des Hauptventilkörpers 43 über die Rille 430 und die Bohrungen 452 in eine Verteilungskammer 453 gelangen, die durch die Ausnehmung 451 in der Buchse 45 zwischen der Buchse 45 und dem Mantelrohr 10 bereitgestellt ist, so daß dann ein Austritt des Wassers über die Bohrungen 12 und 22 in die Entwässerungskanäle 32 stattfinden kann. Wird der Hauptventilkörper 43 jedoch aus seiner Schließposition durch Bewegen der Ventilspindel 41 in Richtung des Spitzendes 23 verschoben, dann verschließen seine Flügel 431 die Bohrung 452 der Buchse 45 und somit die Entwässerungspfade, wie in Figur 4 dargestellt, während eine Wasserentnahme aus dem Rohrnetz 4, 5 möglich ist.

Die Buchse 45 erfüllt in einem erfindungsgemäßen Unterflurhydranten 1 somit eine Vielzahl von Funktionen, nämlich wie folgt:
1. Dichtbuchse
   Über die Buchse 45 im Zusammenspiel mit den Ventilkörpern 43 und 44 kann in Reaktion auf die Position der Ventilspindel 41 eine Entwässerung ermöglicht oder vermieden werden. Zum Zwecke der Abdichtung, wenn also eine Entwässerung vermieden werden soll, weist die Buchse 45 noch zwei nutenartige Aussparungen 454 und 455 zur Aufnahme von Dichtringen 500 und 501 auf. Der eine Dichtring 500 ist dabei im Bereich eines Fußes 456 der Buchse 45 zwischen der Buchse 45 und dem Mantelrohr 10 so angeordnet, dass auch bei anstehenden Radialkräften sicher abgedichtet wird. Der andere Dichtring 501 ist an dem dem Fuß 456 gegenüberliegenden Ende der Buchse 45 in der Aussparung 455 zwischen der Buchse 45 und dem unteren Ende des Mantelrohrs 10 so angeordnet, dass die Dichtwirkung durch Axialkräfte unterstützt wird. Zur Sicherung der Position der Buchse 45 ist zudem auf der der Ausnehmung 455 gegenüberliegenden Fläche der Buchse 45 eine Nase 457 zum Eingreifen in eine Aussparung 21 in dem Spitzende 23 vorgesehen.
   Über die Dichtringe 500 und 501 läßt sich somit eine radiale sowie axiale Abdichtung des erfindungsgemäßen Unterflurhydranten 1 selbst bei nicht vermeidbaren Maßtoleranzen sowie Längendehnungen bei Temperaturschwankungen aufgrund des Einsatzes von Polyethylen als Herstellungsmaterial gewährleisten.
2. Führungsbuchse
   Entlang der Buchse 45 sind die Ventilkörper 43 und 44 bei Bewegung der Ventilspindel 41 verfahrbar. Zu diesem Zwecke ist die Buchse 45 in ihrer Geometrie sowie Bemaßung derart ausgebildet, daß sie im Zusammenspiel mit dem schwimmend gelagerten Rückschlagventilkörper 44 sowie den Dichtungen 500, 501 Maßtoleranzen sowie thermische Expansionen des Unterflurhydranten 1, insbesondere betreffend den Mantelkörper 10 und das Spitzende 23 aus Polyethylen, ausgleichen kann.
3. Versteifungsbuchse
   Vorzugsweise besteht die Buchse 45 aus Metall, wie bereits erwähnt, um den Unterflurhydranten 1 insgesamt zu verfestigen, so daß dem Einsatz von Polyethylen als Werkstoff des Mantelrohrs 10 sowie des Spitzendes 23 keine Festigkeitsschwächen entgegenstehen. Die Buchse 45 weist zudem eine spezielle, der Festigkeit dienende, Geometrie mit dem Fuß 456 zum Angreifen an das Mantelrohr 10 sowie der Nase 457 zum Eingreifen in die Aussparung 21 in dem Spitzende 23 auf.
4. Verteilungsbuchse
   Die Buchse 45 liefert über ihre Bohrungen 452 sowie Ausnehmung 451 ein Kanalsystem zum Entwässern des erfindungsgemäßen Unterflurhydranten 1 über die Verteilungskammer 453. Aufgrund der Existenz nicht nur einer, sondern mindestens zweier Bohrungen 452 in der Buchse 45 wird die Leistung und Gleichmäßigkeit der Entleerung des Unterflurhydranten 1 verbessert. Außerdem ermöglicht die Verteilungskammer 453 auch einen Aufbau, bei dem die Bohrungen 452 in der Buchse 45 nicht mit den Bohrungen 12 und 22 des Mantelrohrs 10 bzw. des Spitzendes 23 ausgerichtet zu sein haben. Dies erleichtert den Zusammenbau.
   Die Buchse 45 ist mit jedem beliebigen Verteilungskammersystem zum Verbessern der Entwässerungsleistung des Unterflurhydranten 1 ausrüstbar.

Ein erfindungsgemäßer Unterflurhydrant weist somit eine Vielzahl von Vorteilen gegenüber bislang bekannten Unterflurhydranten auf, nämlich betreffend die Modularität (Baukastenprinzip), die Materialauswahl (Homogenität durch Auswahl von Polyethylen), die Flexibilität (Multifunktionsbuchse) sowie Sicherheit (Mehrfachentleerung).

Ein erfindungsgemäßer Unterflurhydrant 1 ist zudem auf äußerst einfache Weise, nämlich bspw. wie folgt, herstellbar:

Zuerst wird das Unterteil des Unterflurhydranten 1 in Form des Spitzendes 23 in einem Kunststoffspritzgießverfahren hergestellt, einschließlich der Kanalwände 33.

Als nächstes wird die Buchse 45 gefertigt, bspw. gedreht, und mit den Dichtringen 500 und 501 vormontiert.

Danach wird der Rückschlagventilkörper 44 als Doppelabsperrventil bereitgestellt und in das Spitzende 23 eingelegt.

Sodann wird die vormontierte Buchse 45 mit den Dichtringen 500 und 501 axial in das Spitzende 23 eingebracht, durch Einpressen der Nase 457 in die Aussparung 21. Die dabei entstehende Verankerung dient dem Aufnehmen radialer Kräfte im späteren Betrieb des Unterflurhydranten 1. Beim Verankern der Dichtbuchse 45 im Spitzende 23 dienen die Kanalwände 33 als Art Arretierhilfen, nämlich zur radialen Positionierung der Bohrungen 452.

Die Dichtringe 500 und 501 sorgen im Betrieb für axiale und radiale Abdichtungen. Zudem ermöglichen sie einen Toleranzausgleich, verursacht entweder durch Maßtoleranzen beim Fügen oder Längenausdehnungen des Polyethylens des Mantelrohrs 10 und des Spitzendes 23 bei starken Temperaturschwankungen oder Druckeinwirkungen des Durchflussmediums, insbesondere Wasser.

Daraufhin werden der Hauptventilkörper 43 und die Innengarnitur 42 eingebaut.

Sodann wird der Deckel 11 auf dem Mantelrohr 10 befestigt.

Abschließend werden die Bohrungen 12 und 22 in das Mantelrohr 10 und das Spitzende 23 eingebracht und entweder Schutzkappen 35 oder Sickerschalen 36' über die Entwässerungskanäle 32 aufgesteckt.

Als nächstes kann ein nicht gezeigtes Zusatzrohr aus herkömmlichen Polyethylen-Rohren ausgesucht, auf eine gewünschte Baulänge, einschließlich einer Normbaulänge, abgelängt und mit dem Spitzende 23 verschweißt werden. Alternativerweise kann jedoch auch das Mantelrohr 10 direkt mit dem Spitzende 23 verschweißt werden. Während des jeweiligen Schweißvorganges wird das zusätzliche Rohr bzw. das Mantelrohr 10 unter Einwirkung einer Axialkraft fest auf die Buchse 45 aufgeschoben. Schweißgut längs einer Schweißnaht 13 bildet dann eine weitere Unterstützung in der Verbindung, nämlich in Form einer homogenen Verankerung der Dichtbuchse 45 mit sowohl dem Mantelrohr 10 als auch dem Spitzende 23.

## Patentansprüche

1. Hydrant, insbesondere Unterflurhydrant (1), mit einem Mantelrohr (10) und einem damit verbundenen Ventilgehäuse (20), das an ein Rohrnetz anschließbar ist und in dem ein Hauptventilkörper (43) angeordnet ist, welcher mit einem ersten Ventilsitz zusammenwirkt und mittels einer im Mantelrohr (10) geführten Spindel (41) über eine Innengarnitur (42) betätigbar ist, wobei das Mantelrohr (10) und/oder das Ventilgehäuse (20) aus Kunststoff ausgebildet sind, **dadurch gekennzeichnet, dass** eine Entwässerungsvorrichtung (30, 30') mit zumindest einer Entwässerungsbohrung (31) zum Verbinden des Innenraums des Hydranten (1) mit dem Äußeren desselben vorgesehen ist, die Entwässerungsvorrichtung (30, 30') in Wirkverbindung mit der Entwässerungsbohrung (31) mindestens einen durch zwei Kanalwände (33) begrenzten Entwässerungskanal (32) umfasst, jede Entwässerungsbohrung (31) zumindest eine Bohrung (12) des Mantelrohr (10) und eine Bohrung (22) des Ventilgehäuses (20) umfasst, jede Kanalwand (33) fest mit dem Ventilgehäuse (20) verbunden ist, jeder Entwässerungskanal (32) mit einer Schutzkappe (35) oder einer Sickerschale (36') zumindest im Bereich jeder Entwässerungsbohrung (31) überdeckbar ist und jede Kanalwand (33) zumindest eine Führungsnut (34) zum lösbaren Befestigen der Schutzkappe (35) oder der Sickerschale (36') umfasst

2. Hydrant nach Anspruch 1, **dadurch gekennzeichnet, dass** er mindestens ein Verbindungsstück aus Polyethylen aufweist, welches vorzugsweise in Form eines T-Stücks (3) ausgebildet ist und dem Anschluss an das Rohrnetz dient.

3. Hydrant nach einem der Ansprüche 1 oder 2, **dadurch gekennzeichnet, dass** das Ventilgehäuse (20) zumindest ein Flanschende, Schweißmuffenende und/oder Spitzende (23) umfasst.

4. Hydrant nach einem der voranstehenden Ansprüche, **dadurch gekennzeichnet, dass** das Mantelrohr (10) an seinem von dem Ventilgehäuse (20) abgewandten Ende mit einem Deckel (11) verschließbar ist, wobei der Deckel (11) vorzugsweise eine Entnahmeöffnung (50) sowie eine Öffnung für die Spindel (41) umfasst, über eine Flanschverbindung, Schweißverbindung oder Schraubverbindung befestigbar ist, Metall, insbesondere nichtrostenden Stahl, Guss oder Messing umfasst und/oder zumindest auf seiner dem Innenraum des Mantelrohres zugewandten Fläche, vorzugsweise der Deckel (11) im wesentlichen vollständig, aus Polyethylen, ausgebildet ist.

5. Hydrant nach einem der voranstehenden Ansprüche, **dadurch gekennzeichnet, dass** eine Schweißmuffe (2), insbesondere eine Heizwendelschweißmuffe, vorgesehen ist.

6. Hydrant nach einem der Ansprüche 2 bis 5, **dadurch gekennzeichnet, dass** das Mantelrohr (10), das Ventilgehäuse (20) und gegebenenfalls das Verbindungsstück (3) in einem Kunststoffspritzgießverfahren hergestellt sind.

7. Hydrant nach einem der voranstehenden Ansprüche, **dadurch gekennzeichnet, dass** als Kunststoff Polyethylen ausgewählt ist.

8. Hydrant nach einem der voranstehenden Ansprüche, **dadurch gekennzeichnet, dass** mindestens zwei Entwässerungsbohrungen (31) vorgesehen sind.

9. Hydrant nach einem der voranstehenden Anspruch, **dadurch gekennzeichnet, dass** im Bereich der oder jeder Entwässerungsbohrung (31) ein Entwässerungskanal (32) verläuft.

10. Hydrant nach einem der voranstehenden Ansprüche, **dadurch gekennzeichnet, dass** jede Kanalwand (33) in einem mit dem Ventilgehäuse (20) ausgeformt ist.

11. Hydrant nach einem der voranstehenden Ansprüche, **dadurch gekennzeichnet, dass** jede Führungsnut (34) dem entsprechenden Entwässerungskanal (32) zugewandt ist und sich entlang dieses Entwässerungskanals (32) erstreckt.

12. Hydrant nach einem der voranstehenden Ansprüche, **dadurch gekennzeichnet, dass** vier Entwässerungsbohrungen (31), vier Schutzkappen (35) und/oder zwei Sickerschalen (36') vorgesehen sind.

13. Hydrant nach einem der voranstehenden Ansprüche, **dadurch gekennzeichnet, dass** jede Schutzkappe (35) und/oder jede Sickerschale (36') mit mindestens zwei Schienen (38') zum Eingriff in Führungsnuten (34) der Kanalwände (33) bereitgestellt ist, wobei jede Sickerschale (36') vorzugsweise vier Schienen (38') umfasst.

14. Hydrant nach einem der voranstehenden Ansprüche, **dadurch gekennzeichnet, dass** jede Sickerschale (36') mit mindestens einem Vorsprung (37'a) und/oder mindestens einer Ausnehmung (37'b) zum Eingriff in mindestens eine Ausnehmung (37'b) bzw. an mindestens einen Vorsprung (37'a) einer anderen Sickerschale (36') bereitgestellt ist.

15. Hydrant nach einem der voranstehenden Ansprüche, **dadurch gekennzeichnet, dass** jede Sickerschale (36') mit einer Vielzahl von dem Ventilgehäuse zugewandten Kammern zur Aufnahme von Sickerpackungen und/oder mit einer Vielzahl von dem Ventilgehäuse 20 zugewandten Rippen (39') zur Verstärkung bereitgestellt ist.

16. Hydrant nach einem der voranstehenden Ansprüche, **dadurch gekennzeichnet, dass** jede Kanalwand (33), jede Schutzkappe (35) und/oder jede Sickerschale (36') aus einem Kunststoff, insbesondere aus Polypopylen oder Polyethylen, ausgebildet sind, vorzugsweise in einem Kunststoffgießverfahren.

17. Hydrant nach einem der Ansprüche 7 bis 16, **dadurch gekennzeichnet, dass** das Polyethylen HDPE, insbesondere PE 100, ist.

18. Hydrant nach einem der voranstehenden Ansprüche, **gekennzeichnet durch** eine Buchse (45) die mindestens eine verschließbare Bohrung (452) und mindestens eine, vorzugsweise Rillen- oder Nutartige Ausnehmung (451) aufweist, welche zwischen der Buchse (45) und dem Ventilgehäuse (20) und/oder Mantelrohr (10) mindestens eine Verteilungskammer (453) als Teil der Entwässerungsvorrichtung (30, 30') festlegt und in die einerseits die Bohrung (452) der Buchse (45) und andererseits die Entwässerungsbohrung (31) mündet.

19. Hydrant nach Anspruch 18, **dadurch gekennzeichnet, dass** beidseits der Verteilungskammer (453) jeweils mindestens ein Dichtring (500, 501) zwischen der Buchse (45) und dem Mantelrohr (10) und/oder Ventilgehäuse (20) angeordnet ist.

20. Hydrant nach Anspruch 19, **dadurch gekennzeichnet, dass** die Buchse (45) mindestens eine, vorzugsweise rillen- oder nutartige Aussparung (454, 455) zur Aufnahme des Dichtrings (500, 501) zwischen der Buchse (45) und dem Mantelrohr (10) und/oder Ventilgehäuse (20) aufweist.

21. Hydrant nach einem der voranstehenden Ansprüche, **dadurch gekennzeichnet, dass** in dem Ventilgehäuse (20) ein Rückschlagventilkörper (44) auf der der Spindel (41) abgewandten Seite des Hauptventilkörpers (43) angeordnet ist und mit einem zweiten Ventilsitz (45) zusammenwirkt.

22. Hydrant nach einem der Ansprüche 18 bis 21, **dadurch gekennzeichnet, dass** die Buchse (45) den ersten Ventilsitz und gegebenenfalls einen zweiten Ventilsitz umfasst.

23. Hydrant nach Anspruch 22 im Rückbezug auf Anspruch 21, **dadurch gekennzeichnet, dass** der Rückschlagventilkörper (44), der vorzugsweise eine schwimmend gelagerte Kugel umfasst, die zumindest teilweise in den Hauptventilkörper (43) eindringen kann, und/oder der Hauptventilkörper (43), der vorzugsweise an seinem dem Rückschlagventilkörper (44) zugewandten Ende eine im wesentlichen kugelsegmentförmige Ausnehmung, an seinem von dem Rückschlagventilkörper (44) abgewandten Ende zumindest zwei Flügel (431) und zwischen diesen beiden Enden zumindest eine der Buchse zugewandte, vorzugsweise rillen- oder nutartige Ausnehmung (430) umfasst, entlang der Buchse (45) führbar ist bzw. sind.

24. Hydrant nach Anspruch 23, **dadurch gekennzeichnet, dass** im geschlossenen Zustand des Hauptventils, umfassend den mit der Spindel (41) über die sich durch das Mantelrohr (10) erstreckte Innengarnitur (42) in Verbindung stehenden Hauptventilkörper (43), eine Entleerung des Durchflussmediums, insbesondere eine Entwässerung des Wassers, aus dem Mantelrohr (10), vorbei an den Flügeln (431), über die eine Ausnehmung (430) des Hauptventilkörpers (43) sowie durch Bohrungen (452, 22, 21) der Buchse (45), des Ventilgehäuses (20) und des Mantelrohrs (10) in zumindest einen Entwässerungskanal (32) und/oder zumindest eine Sickerpackung stattfindet, während im geöffneten Zustand besagten Hauptventils die Bohrung (452) der Buchse (45) durch einen Flügel (431) des Hauptventilkörpers (43) zur Vermeidung einer Entleerung, insbesondere Entwässerung, verschlossen ist.

25. Hydrant nach einem der Ansprüche 18 bis 24, **dadurch gekennzeichnet, dass** die Buchse (45) zwei, drei oder vier Bohrungen (452) und der Hauptventilkörper (43) zwei, drei oder vier Flügel (431) umfasst.

26. Hydrant nach einem der Ansprüche 18 bis 25, **dadurch gekennzeichnet, dass** eine erste Aussparung (454) der Buchse (45) längs deren dem Rohrnetz abgewandten Rand, vorzugsweise im Bereich einer fußartigen Verlängerung (456), zur Aufnahme eines ersten Dichtrings (500) zwischen der Buchse (45) und dem Mantelrohr (10) angeordnet ist.

27. Hydrant nach Anspruch 26, **dadurch gekennzeichnet, dass** eine zweite Aussparung (455) der Buchse (45) längs deren dem Rohrnetz zugewandten Rand der Aufnahme eines zweiten Dichtring (501) zwischen der Buchse (45) und dem Mantelrohr (10) angeordnet ist, wobei vorzugsweise die zweite Aussparung (455) in einer Ebene senkrecht zur Ebene der ersten Aussparung (454) verläuft und/oder zwischen der ersten und zweiten Aussparung (454, 455) die Ausnehmung (451) der Buchse (45) angeordnet ist.

28. Hydrant nach einem der Ansprüche 18 bis 27, **dadurch gekennzeichnet, dass** die Buchse (45) in eine Aussparung (21) des Ventilgehäuses (20), vorzugsweise über zumindest eine nasenartige Verlängerung (457) längs des dem Rohrnetz zugewandten Rands, eingreift.

29. Hydrant nach Anspruch 28, **dadurch gekennzeichnet, dass** die nasenartige Verlängerung (457) sich um den kompletten Umfang der Buchse (45) vorzugsweise auf der der zweiten Aussparung (455) der Buchse (45) gegenüberliegenden Fläche, erstreckt.

30. Hydrant nach einem der Ansprüche 18 bis 29, **dadurch gekennzeichnet, dass** die Buchse (45), der Hauptventilkörper (43) und/oder der Rückschlagventilkörper (44) zumindest teilweise aus einem Metall, insbesondere nichtrostendem Stahl oder Messing, ausgeformt ist bzw. sind.

31. Hydrant nach Anspruch 30, **dadurch gekennzeichnet, dass** das Metall der Buchse, des Hauptventilkörpers und/oder der Rückschlagventilkörpers mit Gummi, Neopren, Teflon oder einem Kunststoff, insbesondere Polyethylen, umgeben, insbesondere beschichtet, ist.

## Claims

1. Hydrant, in particular ground hydrant (1), with a tubular casing (10) and a valve housing (20) which is connected to it and can be connected to a pipe network and in which is arranged a main valve body (43) which co-operates with a first valve seat and can be actuated by means of a spindle (41) guided in the tubular casing (10) through an internal fitting (42), the tubular casing (10) and/or the valve housing (20) being made of plastic, **characterised in that** a water drainage device (30, 30') is provided with at least one water drainage bore (31) for connecting the internal chamber of the hydrant (1) with the external chamber thereof, the water drainage device (30, 30') in operative connection with the water drainage bore (31) comprises at least one water drainage channel (32) bounded by two channel walls (33), each water drainage bore (31) comprises at least one bore (12) of the tubular casing (10) and a bore (22) of the valve housing (20), each channel wall (33) is connected securely to the valve housing (20), each water drainage channel (32) can be covered with a protective cap (35) or a drain shell (36') at least in the area of each water drainage bore (31), and each channel wall (33) comprises at least one guide slot (34) for detachable fastening of the protective cap (35) or the drain shell (36').

2. Hydrant according to claim 1, **characterised in that** it comprises at least one connecting piece made of polyethylene which preferably takes the form of a T-piece (3) and serves for connection to the pipe network.

3. Hydrant according to one of claims 1 or 2, **characterised in that** the valve housing (20) comprises at least one flange end, welding sleeve end and/or pointed end (23).

4. Hydrant according to one of the preceding claims, **characterised in that** at its end facing away from the valve housing (20) the tubular casing (10) can be closed with a cover (11), the cover (11) preferably comprising an extraction opening (50) and an opening for the spindle (41), being capable of being fastened through a flange connection, welded connection or screwed connection, comprising metal, in particular stainless steel, cast iron or brass, and/or at least on its surface facing towards the inside of the tubular casing the cover (11) is preferably formed essentially completely of polyethylene.

5. Hydrant according to one of the preceding claims, **characterised in that** a welding sleeve (2), in particular a heating coil welding sleeve, is provided.

6. Hydrant according to one of claims 2 to 5, **characterised in that** the tubular casing (10), the valve housing (20) and possibly the connecting piece (3) are produced by a plastic injection moulding process.

7. Hydrant according to one of the preceding claims, **characterised in that** polyethylene is selected as the plastic.

8. Hydrant according to one of the preceding claims, **characterised in that** at least two water drainage bores (31) are provided.

9. Hydrant according to one of the preceding claims, **characterised in that** a water drainage channel (32) runs in the area of the or each water drainage bore (31).

10. Hydrant according to one of the preceding claims, **characterised in that** each channel wall (33) is formed in one piece with the valve housing (20).

11. Hydrant according to one of the preceding claims, **characterised in that** each guide slot (34) faces the corresponding water drainage channel (32) and extends along this water drainage channel (32).

12. Hydrant according to one of the preceding claims, **characterised in that** four water drainage bores (31), four protective caps (35) and/or two drain shells (36') are provided.

13. Hydrant according to one of the preceding claims, **characterised in that** each protective cap (35) and/or each drain shell (36') is provided with at least two rails (38') for engagement in guide slots (34) in the channel walls (33), each drain shell (36') preferably comprising four rails (38').

14. Hydrant according to one of the preceding claims, **characterised in that** each drain shell (36') is provided with at least one projection (37'a) and/or at least one recess (37'b) for engagement in at least one recess (37'b) or at least one projection (37'a) of another drain shell (36').

15. Hydrant according to one of the preceding claims, **characterised in that** each drain shell (36') is provided with a plurality of chambers facing the valve housing for receiving drainage packings and/or with a plurality of ribs (39') facing the valve housing (20) for stiffening.

16. Hydrant according to one of the preceding claims, **characterised in that** each channel wall (33), each protective cap (35) and/or each drain shell (36') is made of a plastic, in particular of polypropylene or polyethylene, preferably in a plastic moulding process.

17. Hydrant according to one of claims 7 to 16, **characterised in that** the polyethylene is HDPE, in particular PE 100.

18. Hydrant according to one of the preceding claims **characterised by** a bush (45) which exhibits at least one closable bore (452) and at least one preferably groove-type or slot-type recess (451) which between the bush (45) and the valve housing (20) and/or tubular casing (10) defines at least one distribution chamber (453) as part of the water drainage device (30, 30') and into which debouches on the one hand the bore (452) of the bush (45) and on the other hand the water drainage bore (31).

19. Hydrant according to claim 18, **characterised in that** on both sides of the distribution chamber (453) in each case at least one sealing ring (500, 501) is arranged between the bush (45) and the tubular casing (10) and/or valve housing (20).

20. Hydrant according to claim 19, **characterised in that** the bush (45) exhibits at least one, preferably groove-type or slot-type recess (454, 455) for receiving the sealing ring (500, 501) between the bush (45) and the tubular casing (10) and/or valve housing (20).

21. Hydrant according to one of the preceding claims, **characterised in that** a non-return valve body (44) is arranged in the valve housing (20) on the side of the main valve body (43) facing away from the spindle (41) and co-operates with a second valve seat (45).

22. Hydrant according to one of claims 18 to 21, **characterised in that** the bush (45) comprises the first valve seat and possibly a second valve seat.

23. Hydrant according to claim 22 with reference to claim 21, **characterised in that** the non-return valve body (44), which preferably comprises a floating ball which can penetrate at least partly into the main valve body (43), and/or the main valve body (43), which preferably at its end facing towards the non-return valve body (44) comprises an essentially ball segment-shaped recess, at its end facing away from the non-return valve body (44) comprises at least two vanes (431) and between these two ends comprises at least one preferably groove-type or slot-type recess (430) facing towards the bush (45), can be guided along the bush (45).

24. Hydrant according to claim 23, **characterised in that** in the closed state of the main valve, comprising the main valve body (43) in connection with the spindle (41) through the internal fitting (42) extending through the tubular casing (10), the medium flowing through, in particular the water, is drained from the tubular casing (10) past the vanes (431) through the recess (430) of the main valve body (43) and through bores (452, 22, 21) of the bush (45), the valve housing (20) and the tubular casing (10) into at least one water drainage channel (32) and/or at least one drainage packing, whereas in the opened state of said main valve the bore (452) of the bush (45) is closed by a vane (431) of the main valve body (43) to prevent drainage, in particular drainage of water.

25. Hydrant according to one of claims 18 to 24, **characterised in that** the bush (45) comprises two, three or four bores (452) and the main valve body (43) comprises two, three or four vanes (431).

26. Hydrant according to one of claims 18 to 25, **characterised in that** a first recess (454) of the bush (45) is arranged along its edge facing away from the pipe network, preferably in the area of a foot-like extension (456), for receiving a first sealing ring (500) between the bush (45) and the tubular casing (10).

27. Hydrant according to claim 26, **characterised in that** a second recess (455) of the bush (45) is arranged along its edge facing towards the pipe network for receiving a second sealing ring (501) between the bush (45) and the tubular casing (10), the second recess (455) preferably running in a plane perpendicular to the plane of the first recess (454) and/or the recess (451) of the bush (45) being arranged between the first and second recess (454, 455).

28. Hydrant according to one of claims 18 to 27, **characterised in that** the bush (45) engages in a recess (21) of the valve housing (20), preferably through at least one nose-like extension (457) along its edge facing towards the pipe network.

29. Hydrant according to claim 28, **characterised in that** the nose-like extension (457) extends around the complete circumference of the bush (45), preferably on the surface lying opposite the second recess (455) of the bush (45).

30. Hydrant according to one of claims 18 to 29, **characterised in that** the bush (45), the main valve body (43) and/or the non-return valve body (44) is or are formed at least partly of a metal, in particular stainless steel or brass.

31. Hydrant according to claim 30, **characterised in that** the metal of the bush, the main valve body and/or the non-return valve body is surrounded, in particular coated, with rubber, neoprene, Teflon or a plastic, in particular polyethylene.

## Revendications

1. Bouche d'incendie, en particulier bouche d'incendie souterraine (1), comprenant un tube fourreau (10) et un boîtier de soupapes (20) relié audit tube, qui peut être raccordée à un réseau de canalisations et dans lequel est disposé un corps de soupape principale (43) lequel coopère avec un premier siège de soupape et peut être actionné au moyen d'une tige (41) guidée dans le tube fourreau (10) par l'intermédiaire d'une garniture intérieure (42), le tube fourreau (10) et/ou le boîtier de soupapes (20) étant en matière plastique, **caractérisée en ce qu'**il est prévu un dispositif de drainage (30, 30') comprenant au moins un alésage de drainage (31) en vue de relier l'intérieur de la bouche d'incendie (1) à l'extérieur de celle-ci, le dispositif de drainage (30, 30') en liaison active avec l'alésage de drainage (31) comprenant au moins un canal de drainage (32) délimité par deux parois de canal (33), chaque alésage de drainage (31) comprenant au moins un alésage (12) du tube fourreau (10) et un alésage (22) du boîtier de soupapes (20), chaque paroi de canal (33) étant reliée de manière fixe au boîtier de soupapes (20), chaque canal de drainage (32) pouvant être recouvert d'un capot de protection (35) ou d'une coque de drainage (36') au moins dans la zone de chaque alésage de drainage (31), et chaque paroi de canal (33) comprenant au moins une rainure de guidage (34) pour la fixation amovible du capot (35) ou de la coque de drainage (36').

2. Bouche d'incendie selon la revendication 1, **caractérisée en ce qu'**elle comporte au moins une pièce de raccord en polyéthylène, laquelle a de préférence la forme d'un raccord en T (3) et sert pour le raccordement au réseau de canalisations.

3. Bouche d'incendie selon l'une quelconque des revendications 1 ou 2, **caractérisée en ce que** le boîtier de soupapes (20) comprend au moins une extrémité de bride, une extrémité de manchon à souder et/ou une extrémité en pointe (23).

4. Bouche d'incendie selon l'une quelconque des revendications précédentes, **caractérisée en ce que** le tube fourreau (10) peut être fermé à son extrémité opposée au boîtier de soupapes (20) à l'aide d'un couvercle (11), sachant que le couvercle (11) comprend de préférence une ouverture de prélèvement (50) ainsi qu'une ouverture pour la tige (41), peut être fixé au moyen d'une liaison par bride, par soudage ou par vissage, comprend du métal, en particulier de l'acier inoxydable, de la fonte ou du laiton et/ou au moins sur sa surface orientée vers l'intérieur du tube fourreau le couvercle (11) est de préférence réalisé sensiblement entièrement en polyéthylène.

5. Bouche d'incendie selon l'une quelconque des revendications précédentes, **caractérisée en ce qu'**il est prévu un manchon à souder (2), en particulier un raccord chauffant pour soudure par résistance.

6. Bouche d'incendie selon l'une quelconque des revendications 2 à 5, **caractérisée en ce que** le tube fourreau (10), le boîtier de soupapes (20) et le cas échéant la pièce de raccord (3) sont fabriqués dans un procédé de moulage par injection de matière plastique.

7. Bouche d'incendie selon l'une quelconque des revendications précédentes, **caractérisée en ce que** le polyéthylène est choisi comme matière plastique.

8. Bouche d'incendie selon l'une quelconque des revendications précédentes, **caractérisée en ce qu'**il est prévu au moins deux alésages de drainage (31).

9. Bouche d'incendie selon l'une quelconque des revendications précédentes, **caractérisée en ce qu'**un canal de drainage (32) s'étend dans la zone des ou de chaque alésage de drainage (31).

10. Bouche d'incendie selon l'une quelconque des revendications précédentes, **caractérisée en ce que** chaque paroi de canal (33) est formée d'un seul tenant avec le boîtier de soupapes (20).

11. Bouche d'incendie selon l'une quelconque des revendications précédentes, **caractérisée en ce que** chaque rainure de guidage (34) est orientée vers le canal de drainage correspondant (32), et s'étend le long de ce canal de drainage (32).

12. Bouche d'incendie selon l'une quelconque des revendications précédentes, **caractérisée en ce qu'**il est prévu quatre alésages de drainage (31), quatre capots de protection (35) et/ou deux coques de drainage (36').

13. Bouche d'incendie selon l'une quelconque des revendications précédentes, **caractérisée en ce que** chaque capot de protection (35) et/ou chaque coque de drainage (36') est réalisé avec au moins deux rails (38') pour l'engagement dans les rainures de guidage (34) des parois de canal (33), chaque coque de drainage (36') comprenant de préférence quatre rails (38').

14. Bouche d'incendie selon l'une quelconque des revendications précédentes, **caractérisée en ce que** chaque coque de drainage (36') est réalisée avec au moins une saillie (37'a) et/ou au moins un creux (37'b) pour l'engagement dans au moins un creux (37'b) et/ou au niveau d'au moins une saillie (37'a) d'une autre coque de drainage (36').

15. Bouche d'incendie selon l'une quelconque des revendications précédentes, **caractérisée en ce que** chaque coque de drainage (36') est réalisée avec une pluralité de chambres orientées vers le boîtier de soupapes, en vue de recevoir des bourrages de drainage, et/ou avec une pluralité de nervures (39') orientées vers le boîtier de soupapes (20) en vue du renforcement.

16. Bouche d'incendie selon l'une quelconque des revendications précédentes, **caractérisée en ce que** chaque paroi de canal (33), chaque capot de protection (35) et/ou chaque coque de drainage (36') sont fabriqués dans une matière plastique, en particulier dans du polypropylène ou du polyéthylène, de préférence par un procédé de coulée de matière plastique.

17. Bouche d'incendie selon l'une quelconque des revendications 7 à 16, **caractérisée en ce que** le polyéthylène est du HDPE, en particulier du PE 100.

18. Bouche d'incendie selon l'une quelconque des revendications précédentes, **caractérisée par** une douille femelle (45) qui présente au moins un alésage (452) pouvant être fermé et au moins un creux (451) de préférence sous forme de rainure ou de cannelure, lequel définit entre la douille (45) et le boîtier de soupapes (20) et/ou le tube fourreau (10) au moins une chambre de distribution (453) comme partie du dispositif de drainage (30, 30'), et débouche d'une part dans l'alésage (452) de la douille (45) et d'autre part dans l'alésage de drainage (31).

19. Bouche d'incendie selon la revendication 18, **caractérisée en ce que** de part et d'autre de la chambre de distribution (453) est respectivement disposée au moins une bague d'étanchéité (500, 501) entre la douille (45) et le tube fourreau (10) et/ou le boîtier de soupapes (20).

20. Bouche d'incendie selon la revendication 19, **caractérisée en ce que** la douille (45) comporte au moins un évidement (454, 455) de préférence sous forme de rainure ou de cannelure en vue de recevoir la bague d'étanchéité (500, 501) entre la douille (45) et le tube fourreau (10) et/ou le boîtier de soupapes (20).

21. Bouche d'incendie selon l'une quelconque des revendications précédentes, **caractérisée en ce qu'**un corps de soupape de non retour (44) est disposée dans le boîtier de soupapes (20) sur le côté du corps de soupape principale (43) opposé à la tige (41), et coopère avec un second siège de soupape (45).

22. Bouche d'incendie selon l'une quelconque des revendications 18 à 21, **caractérisée en ce que** la douille (45) comprend le premier siège de soupape et, le cas échéant, un second siège de soupape.

23. Bouche d'incendie selon la revendication 22 en référence à la revendication 21, **caractérisée en ce que** le corps de soupape de non retour (44), qui comprend de préférence une bille logée de manière flottante, laquelle peut pénétrer au moins en partie dans le corps de soupape principale (43), et/ou le corps de soupape principale (43), qui comprend de préférence à son extrémité orientée vers le corps de soupape de non retour (44) un creux ayant essentiellement la forme d'un segment sphérique, à son extrémité opposée au corps de soupape de non retour (44) au moins deux ailes (431), et entre ces deux extrémités au moins un creux (430) orienté vers la douille, de préférence sous forme de rainure ou de cannelure, peut et/ou peuvent être guidés le long de la douille (45).

24. Bouche d'incendie selon la revendication 23, **caractérisée en ce que** à l'état fermé de la soupape principale, comprenant le corps de soupape principale (43) relié à la tige (41) par l'intermédiaire de la garniture intérieure (42) s'étendant à travers le tube fourreau (10), un vidage du fluide d'écoulement, en particulier un drainage de l'eau, s'effectue depuis le tube fourreau (10) le long des ailes (431) en passant par le creux (430) du corps de soupape principale (43) ainsi que par des alésages (452, 22, 21) de la douille (45), du boîtier de soupapes (20) et du tube fourreau (10) jusque dans au moins un canal de drainage (32) et/ou au moins un bourrage de drainage, tandis qu'à l'état ouvert de ladite soupape principale l'alésage (452) de la douille (45) est fermé par une aile (431) du corps de soupape principale (43) afin d'éviter un vidage, en particulier un drainage.

25. Bouche d'incendie selon l'une quelconque des revendications 18 à 24, **caractérisée en ce que** la douille (45) comprend deux, trois ou quatre alésages (452), et le corps de soupape principale (43) comprend deux, trois ou quatre ailes (431).

26. Bouche d'incendie selon l'une quelconque des revendications 18 à 25, **caractérisée en ce qu'**un premier évidement (454) de la douille (45) est disposé le long du bord de celle-ci, opposé au réseau de canalisations, de préférence dans la zone d'un prolongement (456) de type pied (456) en vue de recevoir une première bague d'étanchéité (500) entre la douille (45) et le tube fourreau (10).

27. Bouche d'incendie selon la revendication 26, **caractérisée en ce qu'**un second évidement (455) de la douille (45) est disposé le long du bord de celle-ci, orienté vers le réseau de canalisations, en vue de recevoir une seconde bague d'étanchéité (501) entre la douille (45) et le tube fourreau (10), le second évidement (455) s'étendant de préférence dans un plan perpendiculaire au plan du premier évidement (454), et/ou le creux (451) de la douille (45) étant disposé entre le premier et le second évidement (454, 455).

28. Bouche d'incendie selon l'une quelconque des revendications 18 à 27, **caractérisée en ce que** la douille (45) s'engage dans un évidement (21) du boîtier de soupapes (20), de préférence par l'intermédiaire d'au moins un prolongement (457) en forme d'ergot le long du bord orienté vers le réseau de canalisations.

29. Bouche d'incendie selon la revendication 28, **caractérisée en ce que** le prolongement (457) en forme d'ergot s'étend sur tout le pourtour de la douille (45) de préférence sur la surface faisant face au second évidement (455) de la douille (45).

30. Bouche d'incendie selon l'une quelconque des revendications 18 à 29, **caractérisée en ce que** la douille (45), le corps de soupape principale (43) et/ou le corps de soupape de non retour (44) est et/ou sont formés en moins en partie dans un métal, en particulier dans de l'acier inoxydable ou du laiton.

31. Bouche d'incendie selon la revendication 30, **caractérisée en ce que** le métal de la douille, du corps de soupape principale et/ou du corps de soupape de non retour est enveloppé, en particulier enduit de caoutchouc, de néoprène, de téflon ou d'une matière plastique, en particulier de polyéthylène.
